# EUROPEAN PATENT SPECIFICATION

(11) **EP 2 228 536 B1**
(45) Date of publication and mention of the grant of the patent: **01.07.2015**
(21) Application number: 08856372.1
(22) Date of filing: 14.11.2008
(51) Int. Cl.: F04B 49/10, B60H 1/32, F04B 49/06, F25B 49/02

(54) **METHOD FOR CONTROLLING ELECTRIC COMPRESSOR**
VERFAHREN ZUM STEUERN EINES ELEKTRISCHEN VERDICHTERS
PROCÉDÉ POUR COMMANDER UN COMPRESSEUR ÉLECTRIQUE

(30) Priority: 03.12.2007 JP 2007312168
(43) Date of publication of application: 15.09.2010
(73) Proprietor: Sanden Corporation, Isesaki-shi Gunma 372-8502 (JP)
(72) Inventor: SHIBUYA, Makoto, Isesaki-shi Gunma 372-8502 (JP)
(74) Representative: Prüfer & Partner GbR European Patent Attorneys
(86) International application number: PCT/JP2008/070780
(87) International publication number: WO 2009/072384

(56) References cited:
- JP-A- 3 195 394
- JP-A- 4 317 594
- JP-A- 2001 206 236
- JP-A- 2003 139 069
- JP-A- 2006 287 209
- JP-A- 2006 307 720
- JP-A- 2007 082 365
- JP-A- 2007 198 341
- US-A- 5 316 074
- US-A1- 2005 210 897

## Description

### Technical Field of the Invention

The present invention relates to a method for controlling an electric compressor, such as one suitable for a compressor in an air conditioning system for vehicles, into which an inverter for controlling an electric motor as a drive source is integrally incorporated.

### Background Art of the Invention

In a conventional electric compressor as disclosed in patent document 1 or 2 into which an inverter for controlling an electric compressor is integrally incorporated, an inverter accessory such as a smoothing capacitor, and a coil or capacitor for EMC-filter, which means a filter for electromagnetic compatibility, is designed as capable of preventing failures even when used at such a condition as high temperature and maximum electric current. Therefore, used are accessory parts which are designed to cause no defect even when they are utilized under high temperature and the maximum electric current flows, as well as when they are utilized at a usual condition.

However, when the accessory parts are designed/selected so as to cause no defect in the accessories even if used under high temperature environment or the maximum electric current, the accessories have to grow in their own size. In addition, that accompanies that even a harness which connects each accessory part to compose an electric circuit grows in size. Therefore the electric circuit has to grow in cost and weight, and an electric compressor may grow in cost and size. Further, their freedom to be mounted in vehicles, etc., may be reduced.
Patent document 1: JP-2002-243246-A
Patent document 2: JP-2007-216818-A

JP-A-3-195 394 which is the closest prior art with regard to the present application, discloses a method to prevent over-heating of an element of an air conditioner, which method comprises detecting an input current into a rectifier of the air conditioner and detecting a temperature near an inverter of the air conditioner. From those detected values, there is estimated a temperature rise. If the estimated temperature is higher than a reference temperature, then the operating frequency of the compressor is reduced.

Furthermore, US 5 316 074 discloses an automotive air conditioner, comprising a refrigerating unit with a compressor for carrying out a refrigerating cycle. The rotating speed of the compressor, hence the flow rate of the refrigerant, is regulated by controlling an inverter for controlling an electric motor for driving the compressor according to a temperature set by the temperature regulator.

It is the object of the present invention to provide a method for controlling an electric compressor, into which an inverter for controlling an electric motor as a drive source is integrally incorporated, which can prevent a defect of an accessory even if there is a high temperature environment.

According to the present invention, this object is achieved by a method according to claim 1. Preferred embodiments are given in the sub claims.

To achieve the above-described object, a method for controlling an electric compressor according to the present invention is a method for controlling an electric compressor into which an inverter for controlling an electric motor as a drive source is integrally incorporated, comprising the steps of: acquiring a temperature of an accessory of the inverter; when the acquired temperature becomes or is already equal to or higher than a maximum rated temperature of the accessory, calculating a value of an electric current which can flow at the acquired temperature and restrictively controlling a rotational speed of the electric compressor such that an input electric current becomes equal to or less than a value of the electric current which can flow; and when the temperature of the accessory becomes lower than the maximum rated temperature, releasing the restrictive control. In such a control method, the value of the electric current that can flow electricity into the accessory is calculated depending on the temperature of the acquired accessory, and the rotational speed of the electric compressor is restrictively controlled so that an actual input current becomes equal to or less than a predetermined value. When the temperature of the accessory of the inverter of the electric compressor is more than, or equal to, the maximum rated temperature of the accessory in such a season as summer, because the rotational speed of the electric compressor is restrictively controlled, the temperature increase by the electricity flowed into the electric compressor is suppressed so as to avoid further temperature increase. Further, after the electric compressor starts to be operated, the accessory is cooled by sucked refrigerant and then becomes equal to or less than the maximum rated temperature, so that the restrictive control can be released and a usual control for the rotation speed can be performed. Therefore, even when the accessory is designed based on a value of electric current in a usual operation, defect generation can be prevented.

The accessory temperature can be acquired by a temperature sensor provided in the neighborhood of the accessory, for example. Furthermore, the accessory temperature may be estimated from a value of an electric current flowing in the accessory and a sensor value of a temperature sensor provided in a space to mount the inverter inside the electric compressor, and the estimated value may be deemed to be an accessory temperature which can be used for determination in the restrictive control.

As an example of the above-described accessory, a smoothing capacitor or, a coil or a capacitor for EMC-filter, etc., can be quoted.

An electric compressor to which the control method of an electric compressor according to the present invention is applied is particularly suitable for refrigeration cycle of an air conditioning system of vehicles.

### Effect according_to the Invention

In the control method of an electric compressor according to the present invention, when the temperature of the inverter accessory reaches or has reached the maximum rated temperature, the rotational speed of the electric compressor is controlled restrictively so that the input electric current becomes no more than the value at which the electricity can flow. Therefore, such a defect that the accessory is overheated over the maximum rated temperature for a long time can be surely prevented. Further, instead of the maximum electric current, an electric current during a usual operation may be sufficiently used as a standard electric current for designing and choosing the accessory. Therefore the growth in the accessory size can be avoided, so that the circuit and even the device can be reduced in weight and size.

Furthermore, as for a temperature of the accessory, a temperature data acquired by a temperature sensor provided near the accessory or a space temperature data measured by a temperature sensor provided in a space where the inverter is mounted inside the electric compressor can be utilized as determination information for the restrictive control, as well as a temperature data estimated from the present electric current in the accessory can be utilized. Therefore, necessary information for the determination in the restrictive control can be easily acquired, and the control method according to the present invention can be surely applied to an electric compressor into which an inverter is integrally incorporated.

### Brief explanation of the drawings

[Fig. 1] Fig. 1 is a longitudinal sectional view of an electric compressor to which a control method of an electric compressor according to an embodiment of the present invention is applied.
[Fig. 2] Fig. 2 is a chart showing a timing of a restrictive control in a control method of an electric compressor according to an embodiment of the present invention.
[Fig. 3] Fig. 3 is a chart showing a timing of a restrictive control in another control method of an electric compressor.
[Fig. 4] Fig. 4 is a flow diagram showing an embodiment of a temperature determination control in a control method of an electric compressor according to an embodiment of the present invention.
[Fig. 5] Fig. 5 is a flow diagram showing an embodiment of a rotational speed designation control in a control method of an electric compressor according to an embodiment of the present invention.
[Fig. 6] Fig. 6 is a circuit diagram showing an inverter and a filter circuit, of an electric compressor to which a control method of an electric compressor according to an embodiment of the present invention is applied.
[Fig. 7] Fig. 7 is a circuit diagram showing an embodiment of a filter circuit different from the one in Fig. 6.
[Fig. 8] Fig. 8 is a circuit diagram showing an embodiment of a filter circuit different from the one in Fig. 6 or Fig. 7.
[Fig. 9] Fig. 9 is a circuit diagram showing an embodiment of a filter circuit different from the one in Fig. 6 - Fig. 8.
[Fig. 10] Fig. 10 is a circuit diagram showing an embodiment of a filter circuit different from the one in Fig. 6 - Fig. 9.

### Explanation of symbols

1: electric compressor
2: discharge housing
3: middle housing
4: suction housing
5: fixed scroll member
6: movable scroll member
7: compression mechanism
8: crank mechanism
9: rotating shaft
10: electric motor
11: rotor
12: stator
13: inverter
14: space
15: filter circuit
16: capacitor
16a: smoothing capacitor
17: coil
18: temperature sensor
19: suction port
20: discharge part
21: switching element
22: inverter control device
23: power supply

### The Best mode for carrying out the Invention

Hereinafter, desirable embodiments of a control method of an electric compressor according to embodiments of the present invention will be explained referring to figures.

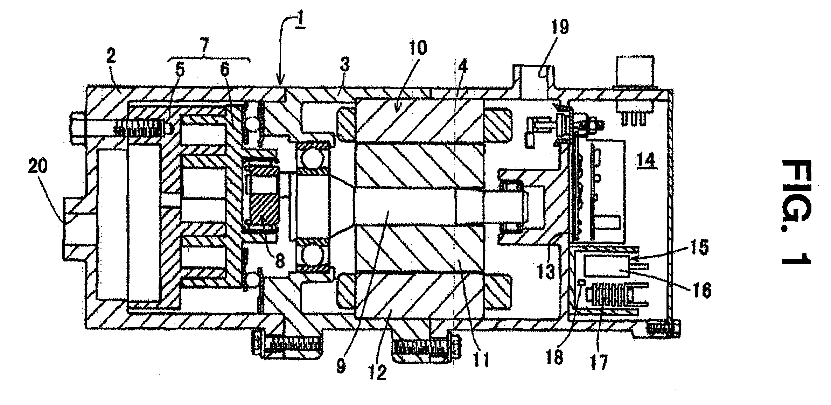

Fig. 1 shows an electric compressor to which a control method of an electric compressor according to the present invention is applied. In Fig. 1, symbol 1 implies an electric compressor. Further, electric compressor 1 shown in Fig. 1 is an electric compressor which is applied to a refrigeration cycle in an air conditioning system for vehicles, such as an automobile. Electric compressor 1 has discharge housing 2, intermediate housing 3, and suction housing 4. In discharge housing 2, provided is compression mechanism 7 made by combining fixed scroll member 5 and movable scroll member 6.

One end of rotating shaft 9 is connected to the back of movable scroll member 6 through crank mechanism 8. Rotating shaft 9 is connected to electric motor 10 as a drive source of electric compressor 1. Electric motor 10 has rotor 11 which rotates integrally with rotating shaft 9, and stator 12 which is provided outside of rotor 11.

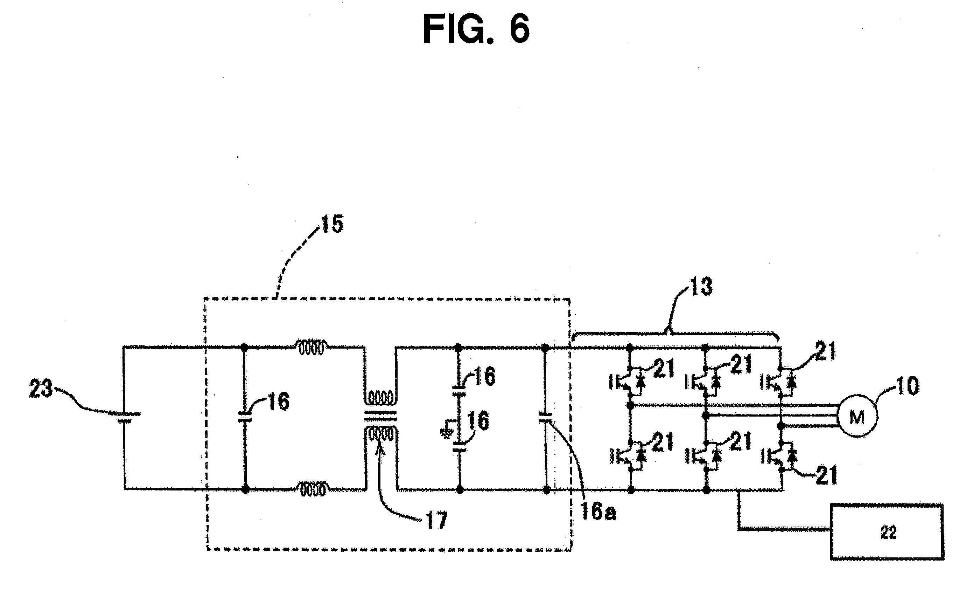

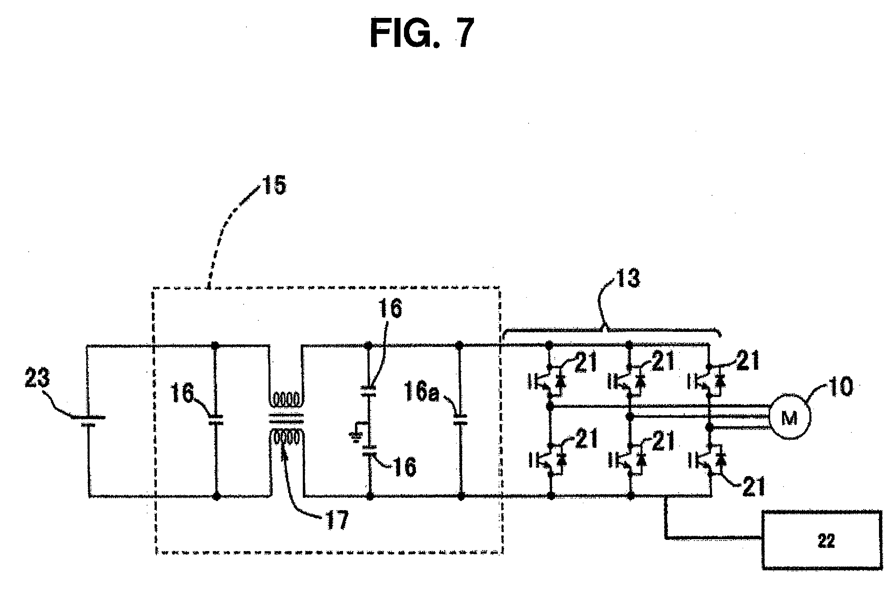

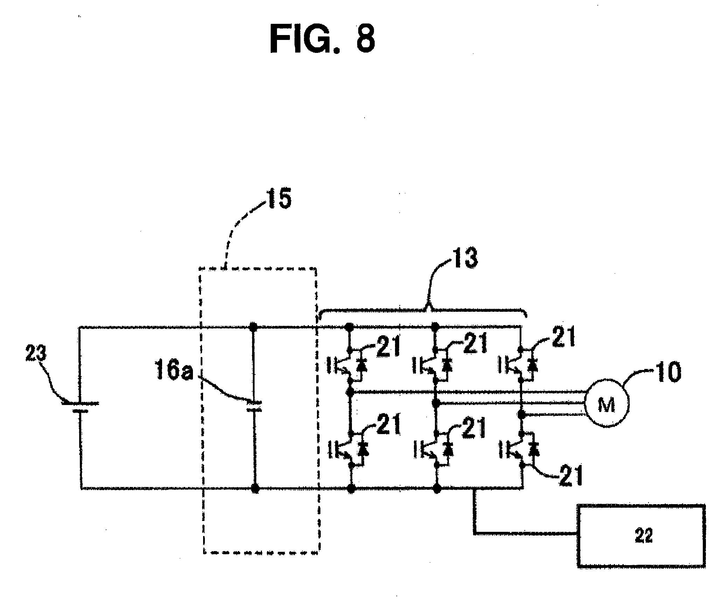

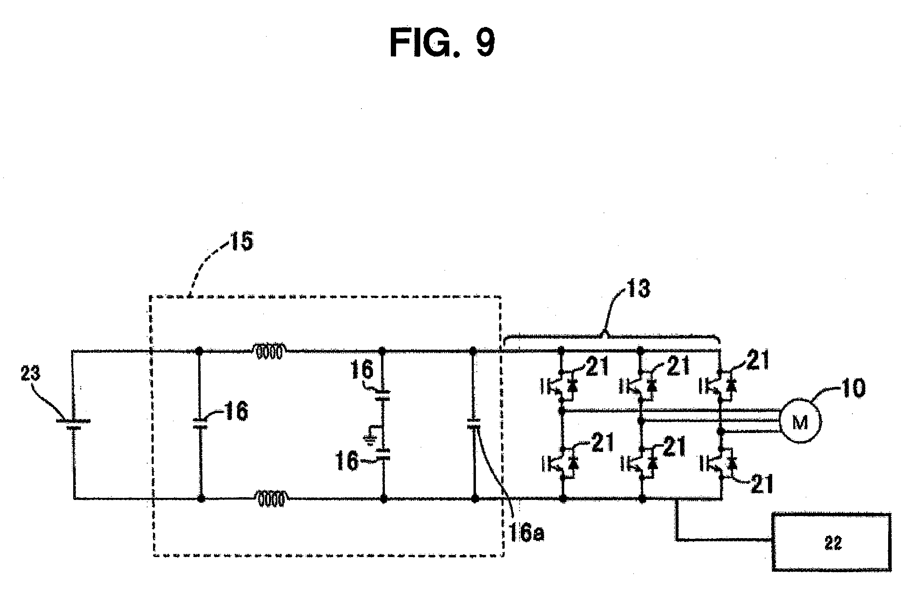

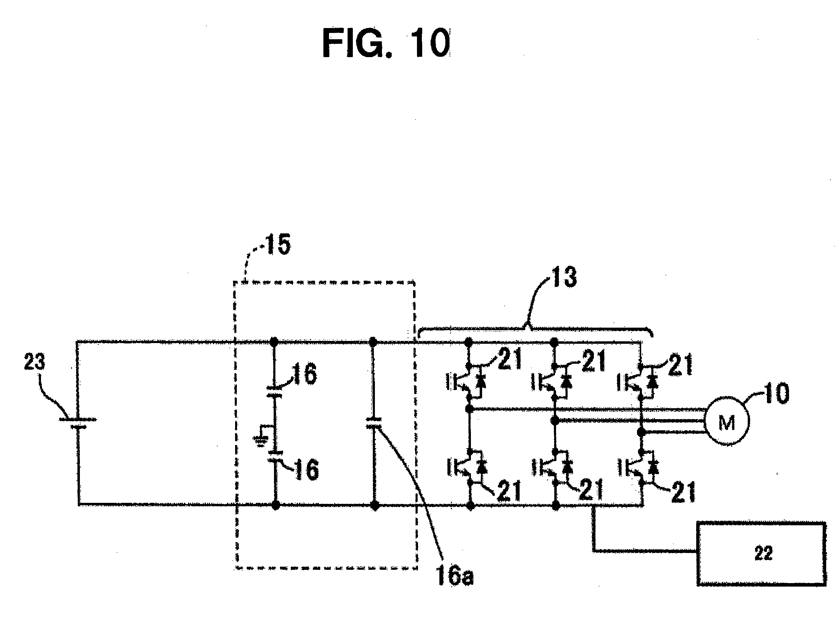

The rotational speed of electric motor 10 is controlled by inverter 13, and inverter 13 is mounted in space 14 inside suction housing 4. Three pairs, which equal six in total, of switching elements 21 are provided in inverter 13, as shown in Fig. 6. In this embodiment, capacitor 16 and coil 17 for EMC-filter are provided in space 14, as well as filter circuit 15 having smoothing capacitor 16a is. Further, temperature sensor 18 which measures internal temperature of space 14 is provided in space 14. In addition, filter circuit 15 can be composed in various embodiments as shown in Fig. 7 - Fig. 10, as well as Fig. 6. The electric current input from power supply 23 is modulated through filter circuit 15 into an appropriate current waveform, and is supplied to electric motor 10 as an electric current of which frequency has been controlled at a predetermined level through inverter 13 controlled by inverter control device 22.

In the above-described electric compressor 1, refrigerant which has been sucked from suction port 19 provided on suction housing 4 is delivered to compression mechanism 7 and compressed, and then, is discharged from discharge port 20 provided on discharge housing 2. Further, some of the refrigerant sucked inward from suction port 19 flows into space 14, so as to chill inverter 13 and smoothing capacitor 16 in filter circuit 15, etc.

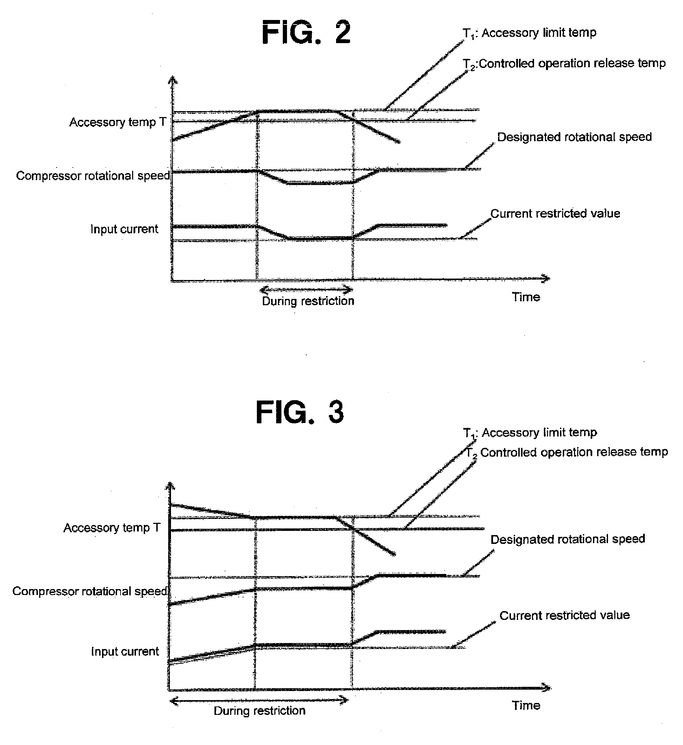

In the above-described electric compressor 1, temperature of an accessory such as smoothing capacitor 16a of inverter 13, which is simply called "accessory" hereinafter, is acquired, and when the acquired temperature becomes or is already equal to or higher than the maximum rated temperature of the accessory, a value of an electric current which can flow at the acquired temperature is calculated, and a rotational speed of the electric compressor 1 is controlled restrictively so that an input electric current becomes equal to or less than a value of the electric current which can flow, and then, the restrictive control is released when the temperature of the accessory becomes lower than the maximum rated temperature. Fig. 2 shows the restrictive control timing in a case where temperature T of the accessory of electric compressor 1 reaches the maximum rated temperature (accessory limit temperature) T1. In Fig. 2, when accessory temperature T reaches accessory limit temperature. T1, the value of the electric current which can flow into the accessory at the acquired temperature is calculated, and the rotational speed of electric compressor 1 is controlled restrictively so that the electric current input into the accessory becomes equal to or lower than the value (current restricted value) of the electric current which can flow. Further, when accessory temperature T becomes lower than maximum rated temperature T1 through the rotational speed control and has reached restrictively controlled operation release temperature T2, the restrictive control comes to be released.

In addition, when a vehicle is left under the scorching sun as in summer season, sometimes at the startup of electric compressor 1, accessory temperature T already becomes higher than maximum rated temperature T1. In such a case, the rotational speed of electric compressor 1 is controlled restrictively from the startup as being equal to, or less than, designated rotational speed, as shown in Fig. 3. And when accessory temperature T becomes lower than maximum rated temperature T1 through the rotational speed control and has reached restrictively controlled operation release temperature T2, the restrictive control comes to be released.

Concretely, the restrictive control is performed by inverter control device 22 which is connected to inverter 13 as shown in Fig. 6. The inverter control device 22 is programmed to perform the temperature determination flow and the rotational speed designation flow as described later, however, inverter control device 22 may be controlled by a control device (not shown) provided separately.

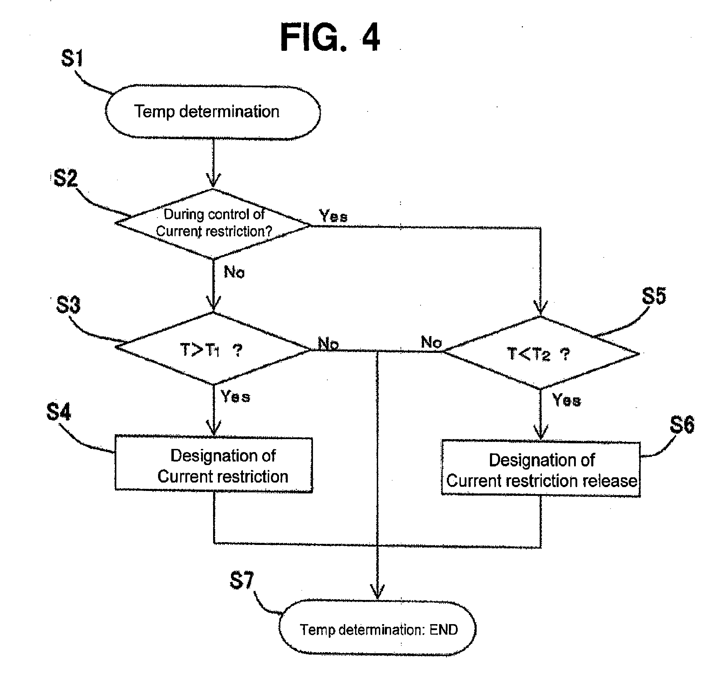

At first, the temperature determination flow will be explained with Fig. 4. In a control method according to the present invention, the temperature is determined by that flow to perform the restrictive control. In this embodiment, accessory temperature T is estimated from the temperature measured by temperature sensor 18 in space 14, and from the electric current (input current) which actually flows in the accessory, and the estimated value is used as a acquired temperature in the temperature determination. The temperature determination flow starts in Step S1, determining in Step S2 whether the present time is during the control of electric current restriction. When it has been determined that the present time is not during the control of electric current restriction in Step S2, whether accessory temperature T is higher than maximum rated temperature T1 is determined in Step S3. When it has been determined that accessory temperature T is higher than maximum rated temperature T1 in Step S3, the electric current restriction is promptly designated in Step S4, and the temperature determination flow is finished in Step S7. On the other hand, when it has been determined that accessory temperature T is not higher than maximum rated temperature T1 in Step S3, the temperature determination flow is finished in Step S7 without Step S4 where the designation of the electric current restriction is performed. Further, when it has been determined that the present time is during the control of electric current restriction in Step S2, it is determined in Step S5 whether accessory temperature T has decreased to restrictive controlled operation release temperature T2. When it has been determined that accessory temperature T has decreased to restrictively controlled operation release temperature T2, the electric current restriction release is designated in Step S6, and the temperature determination flow is finished in Step S7. On the other hand, when it has been determined that accessory temperature T has not decreased to restrictively controlled operation release temperature T2 in Step S5, the temperature determination flow is finished in Step S7 without Step S6 where the designation of the electric current restriction release is performed.

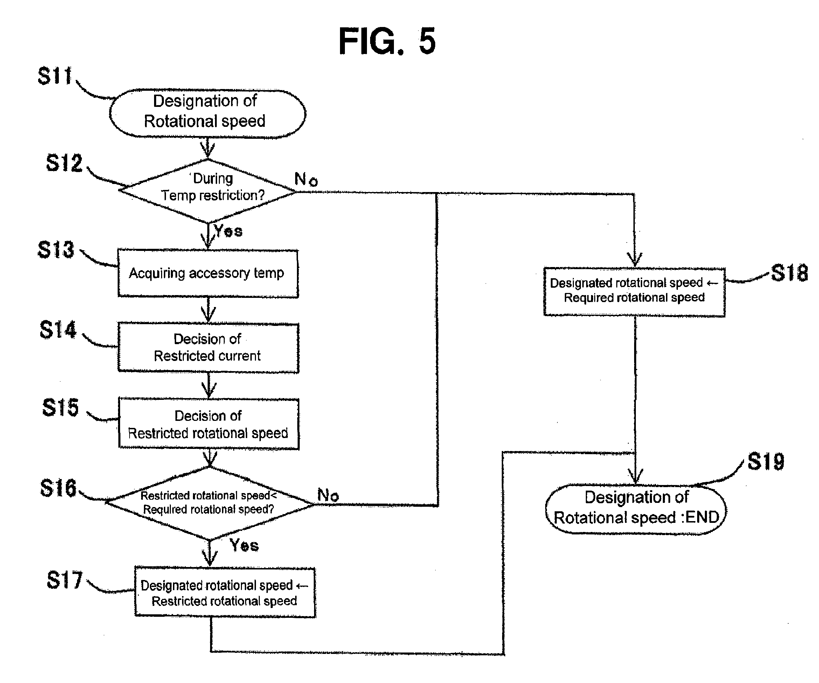

Secondly, the rotational speed designation flow of electric compressor 1 will be explained with Fig. 5. After the rotational speed designation flow starts in Step S11, whether the present time is during the temperature restriction (the above described restrictive control) is determined in Step S12. When it has been determined that the present time is during the temperature restriction, the restricted rotational speed is decided in Step S15, through Step 13 where the accessory temperature T is acquired and Step S14 where the input electric current is decided. Subsequently, the restricted rotational speed decided in Step S15 is compared with the required rotational speed in Step S16. When it has been determined that the restricted rotational speed is lower than the required rotational speed in Step S16, the restricted rotational speed is designated as a designated rotational speed in Step S17, and the rotational speed designation flow is finished in Step S19. On the other hand, when it has been determined that the restricted rotational speed is higher than the required rotational speed, the required rotational speed is designated as a designated rotational speed in Step S18, and the rotational speed designation flow is finished in Step S19. Further, even when it is determined that the present time is not during the restrictive control in Step S12, the required rotational speed is designated as a designated rotational speed in Step S 18, and the rotational speed designation flow is finished in Step S 19.

In the control method of an electric compressor according to the present invention, the electric current value which can flow in the accessory is calculated depending on acquired accessory temperature T, and the rotational speed of the electric compressor is controlled restrictively so that the actual input electric current is equal to or less than the value of the calculated electric current. Therefore, when the accessory temperature of the electric compressor is equal to or more than maximum rated temperature T1 as in summer season, the rotational speed of electric compressor 1 is restrictively controlled, so as to suppress further increase of accessory temperature T. Further, after the operation of electric compressor 1 is started, the accessory is quickly chilled by sucked refrigerant so as to become equal or less than maximum rated temperature T1, so that the restrictive control can be released. Therefore, defects of the accessory from overheat can be surely prevented. Additionally, in such a control method an electric current in a usual operation can be set as a standard electric current value for designing and selecting the accessory, so as to contribute to the reduction in size and weight of the accessory and the whole electric compressor.

Though in the above-described embodiments the temperature of the smoothing capacitor as an accessory is acquired and controlled restrictively, the temperature such as of a capacitor and of a coil for EMC-filter can be acquired and controlled restrictively as well.

### Industrial Applications of the Invention

The control method of an electric compressor according to the present invention is applicable to an electric compressor having an integrally incorporated inverter, and is specifically suitable for a control method of an electric compressor in an air conditioning system for vehicles, which tends to be left under high temperature.

## Claims

1. A method for controlling an electric compressor (1) into which an inverter (13) for controlling an electric motor (10) as a drive source is integrally incorporated, comprising the steps of:
acquiring (S 13) a temperature of an accessory of said inverter (13);
when said acquired temperature becomes or is already equal to or higher than a maximum rated temperature of said accessory, calculating a value of an electric current which can flow at said acquired temperature and restrictively controlling a rotational speed of said electric compressor (1) such that an input electric current becomes equal to or less than a value of said electric current which can flow; and
when said temperature of said accessory becomes lower than said maximum rated temperature, releasing said restrictive control, and
wherein said temperature of said accessory is acquired by a temperature sensor (18) provided near said accessory.

2. The method for controlling an electric compressor according to claim 1, wherein said accessory is a smoothing capacitor (16a) or, a coil or a capacitor for EMC-filter.

3. The method for controlling an electric compressor (1) according to claim 1, wherein said electric compressor is a compressor of an air conditioning system for vehicles.

## Patentansprüche

1. Verfahren zum Steuern eines elektrischen Kompressors (1), in den ein Inverter (13) zum Steuern eines elektrischen Motors (10) als Ansteuerquelle integriert ist, mit den Schritten:
Erlangen (S 13) einer Temperatur eines Ausrüstungsteils des Inverters (13);
wenn die erlangte Temperatur gleich oder höher als eine maximale Nenntemperatur des Zubehörteils bereits ist oder wird, Berechnen eines Werts eines bei der erlangten Temperatur möglichen elektrischen Stroms, und restriktives Steuern einer Drehgeschwindigkeit des elektrischen Kompressors (1), so dass ein elektrischer Eingangsstrom kleiner oder gleich einem Wert des möglichen elektrischen Stroms wird; und
wenn die Temperatur des Ausrüstungsteils geringer wird als die maximale Nenntemperatur, Beenden der restriktiven Steuerung, und
wobei die Temperatur des Ausrüstungsteils mittels eines in der Nähe des Ausrüstungsteils bereitgestellten Temperatursensors (18) erlangt wird.

2. Verfahren zum Steuern eines elektrischen Kompressors nach Anspruch 1, wobei das Ausrüstungsteil ein Glättungskondensator (16a) oder eine Spule oder ein Kondensator für ein EMC-Filter ist.

3. Verfahren zum Steuern eines elektrischen Kompressors (1) nach Anspruch 1, wobei der elektrische Kompressor ein Kompressor für eine Klimaanlage für Fahrzeuge ist.

## Revendications

1. Procédé de commande d'un compresseur électrique (1) dans lequel est intégralement incorporé un onduleur (13) permettant de commander un moteur électrique (10) en tant que source motrice, comprenant les étapes consistant à :
- détecter (S13) la température d'un accessoire de l'onduleur (13), et lorsque la température détectée devient ou est déjà égale ou supérieure à la température de régime maximum de l'accessoire, calculer la valeur de l'intensité du courant électrique qui peut passer à la température détectée et commander en la limitant la vitesse de rotation du compresseur électrique (1) de sorte que l'intensité du courant électrique d'entrée devienne égale ou inférieure à la valeur de l'intensité du courant électrique qui peut passer, et lorsque la température de l'accessoire devient inférieure à la température de régime maximum, libérer la commande par limitation, la température de l'accessoire étant déterminée par un capteur de température (18) monté à proximité de cet accessoire.

2. Procédé de commande d'un compresseur électrique conforme à la revendication 1, selon lequel l'accessoire est un condensateur de filtrage (16a), ou une bobine ou un condensateur pour un filtre EMC.

3. Procédé de commande d'un compresseur électrique (1) conforme à la revendication 1, selon lequel le compresseur électrique est un compresseur d'un système de climatisation de véhicule.
